# EUROPEAN PATENT APPLICATION

(11) **EP 1 059 156 A2**
(43) Date of publication of application: **13.12.2000**
(21) Application number: 00102335.7
(22) Date of filing: 03.02.2000
(51) Int. Cl.: B29C 51/00

(54) **Equipment for moulding thermoplastic articles**

(30) Priority: 11.06.1999 IT TO990506
(71) Applicant: CRS Srl Centro Ricerche e Sperimentazioni, 10060 Frossasco (IT)
(72) Inventor: Cesano, Franco, 10060 San Secondo di Pinerolo (IT)
(74) Representative: Marchitelli, Mauro

(57) **Abstract**

Equipment for moulding articles including a body (12) of thermoplastic material and at least one coating layer (14) applied on at least one surface of the body (12). The equipment comprises:
- an upper die (24) and a lower die (22), cooled down to a temperature lower than the plasticisizing temperature of the body of thermoplastic material (12),
- means for positioning said coating layer (46) between the upper die (24) and the lower die (22), and
- an intermediate moulding element (48) provided with heating means (54) and having a forming surface (50) intended to co-operate with the lower die (22).
The intermediate moulding element (48) is movable between an operative position in which it is arranged between the upper die (24) and the lower die (22) and an inoperative position in which the dies (22, 24) co-operate directly with each other without the interposition of said intermediate moulding element (48).

## Description

The present invention relates to equipment for moulding articles including at least one sheet of thermoplastic material and at least one coating layer intended to be applied on a surface of the sheet.

More precisely, the invention relates to equipment of the type comprising:
- an upper die and a lower die, cooled down at a temperature lower than the plasticizing temperature of the sheet of thermoplastic material, and
- means for positioning the coating layer between the upper die and lower die.

In known moulding equipment, with a single moulding operation there are obtained both the moulding of the sheet (or sheets) of thermoplastic material placed in a plastic state on the lower die and the application of the coating layer on the upper surface of the sheet.

Recently the necessity has arisen of producing coated articles of thermoplastic material having areas with different thickness. If sheets of thermoplastic material having initially uniform thickness are used, for forming the article into its final form it is necessary to apply different pressures on the areas with different thickness. However, in this way evident diversity of coating colour are produced in the areas subjected to different moulding pressures, sometimes also due to the fact that metal reinforcing elements are inserted in the article.

The object of the present invention is to provide a moulding equipment which allows the production of articles having areas with different thickness without however producing marks on the coating.

According to the present invention, this object is achieved by equipment having the features forming the subject of the main claim.

The present invention will be disclosed in detail with reference to the attached drawings, given purely by way of non-limiting example, in which:
- figure **1** is a perspective view of a thermoplastic article produced by equipment according to the present invention,
- figure **2** is a cross-section taken along the line II-II of figure 1, and
- figures **3-6** are partial schematic cross-sections showing the operating sequence of the equipment according to the invention.

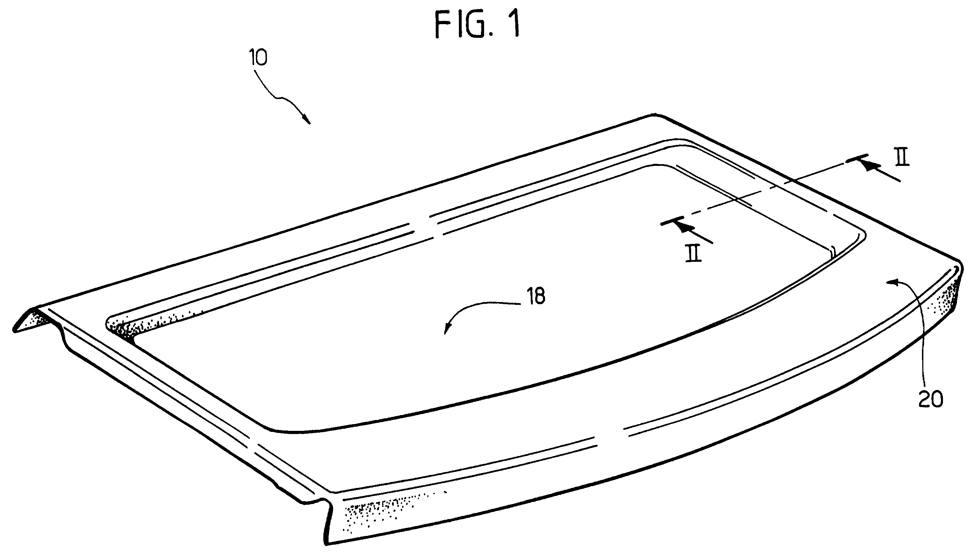

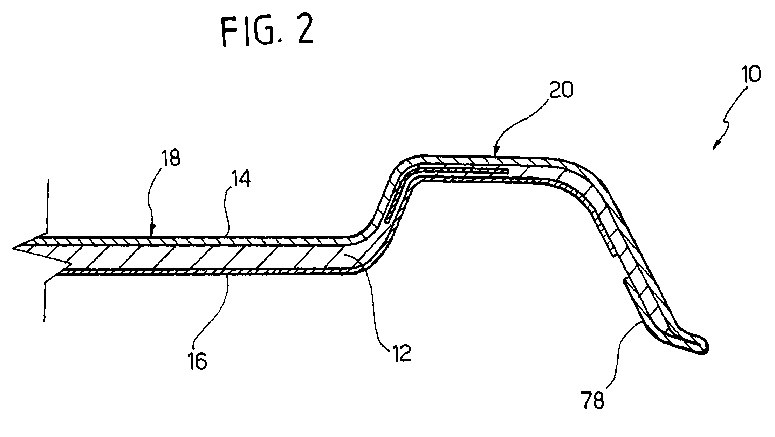

In figures 1 and 2 the numeral reference 10 indicates a rear shelf for vehicles which is manufactured by equipment according to the present invention. As shown in figure 2, the rear shelf 10 comprises a central body 12 of thermoplastic material provided with an upper coating 14 and with a lower coating 16. With reference to figure 1, the rear shelf 10 has a recessed area 18 surrounded by a perimetral frame 20. As shown in figure 2, the central body of thermoplastic material 12 has a greater thickness in correspondence with the recessed area 18 and a lower thickness in correspondence with the perimetral frame 20. The area with lower thickness is obtained by applying a greater compression to the material, in order to give to the perimetral area improved characteristics of mechanical resistance. The greatest thickness in the area 18 serves for obtaining better acoustic damping.

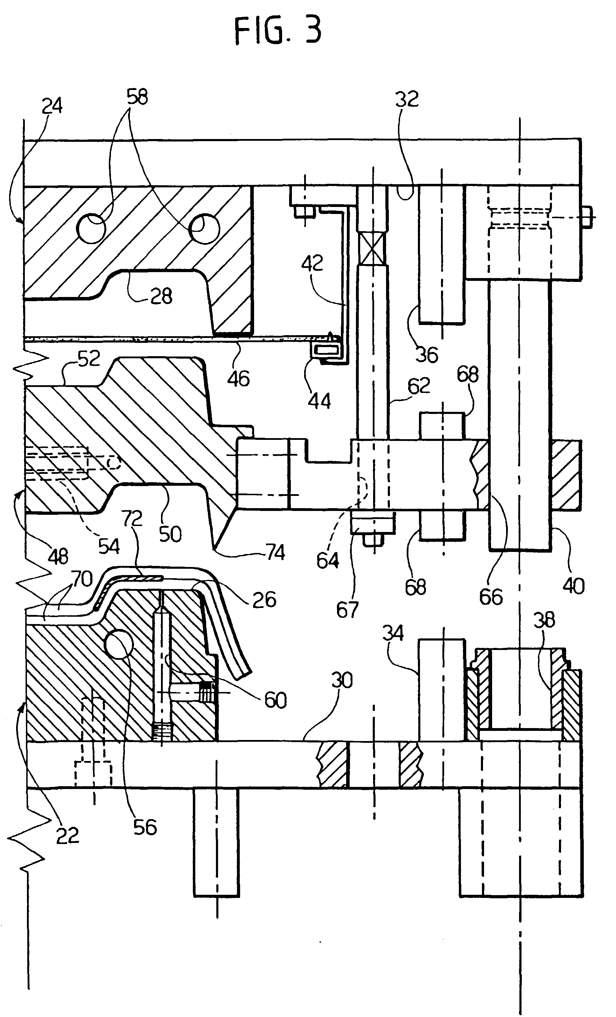

Referring now to figures 3 to 6, the equipment for moulding the article 10 comprises a lower die 22 and an upper die 24, having respective moulding surfaces 26, 28. The dies 22, 24 are movable with respect each other in a vertical direction, between an open position and a closed position. In the example shown in the figures, the lower die 22 is carried by a stationary plate 30 whereas the upper die 24 is fixed to a movable plate 32. The plates 30 and 32 are provided with respective stop elements 34, 36 intended to co-operate with each other for defining the closed position of the two dies 22, 24. The stationary plate 30 has a guide bush 38 which is intended to be engaged by a guide column 40 carried by the movable plate 32. An L-shaped braket 42 is fixed to the movable plate 32. The L-shaped braket supports a frame 44 on which a sheet 46 is stretched, the sheet 46 being intended to form the upper coating 14 of the article 10.

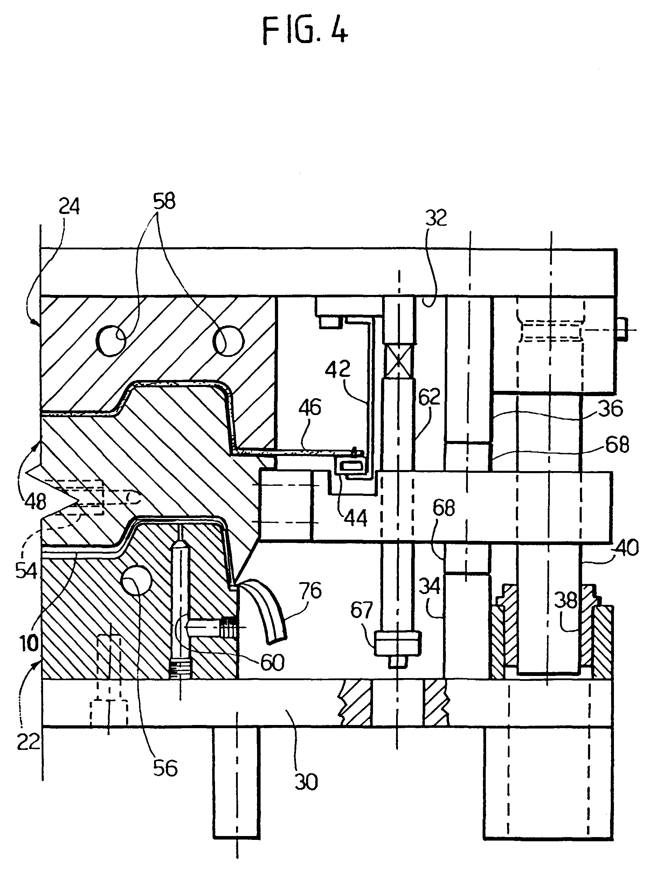

The equipment according to the present invention further comprises an intermediate moulding element 48 having a lower moulding surface 50 and an upper moulding surface 52. The intermediate moulding element 48 is provided with heating elements 54 formed for instance by electric resistors having the purpose of heating the moulding element 48 at a temperature close to or higher than the plasticizing temperature of the thermoplastic material to be moulded, for instance higher than 120° and preferably of about 180°. One the contrary, the dies 22 and 24 are provided with respective pipings 56, 58 through which, in use, a floow of water circulates which maintains the dies 22, 24 at a temperature lower than the plasticizing temperature of the thermoplastic material, for instance of about 18-20°. In the lower die 22 channels 60 can also be formed, intended to be selectively connected either to a source of depression or to a source of compressed air. The intermediate moulding element 48 is movable with respect to the two dies 22, 24 between an operative position shown in figures 3 and 4 and an inoperative position in which it extends of outside the moulding zone. In its operative position, the intermediate moulding element 48 is free to slide in a vertical direction with respect to the upper die 24 and is guided with respect to the latter by one or more guide columns 62 and possibly also by the guide column 40. The intermediate moulding element 48 is provided with seats 64, 66 for engaging the columns 40 and 62. For allowing the extraction of the intermediate moulding element 48 from the moulding zone, the seats 64, 66 are open so that the intermediate moulding element 48 can be moved between the operative position and inoperative position, and vice-versa, for instance by a movement in a direction orthogonal to the plane of representation of figures 3-6. As an alternative, the intermediate moulding element 48 could be rotatably mounted about a vertical axis and its own movement between the operative and inoperative position could be obtained by a rotation about such vertical axis. The guide column 62 has at its lower end an enlarged end portion 67 which acts as a support for the intermediate moulding element 48 when it is in its operative position. The intermediate moulding element 48 has also a pair of stop elements 68 which, in the operative position, are aligned with the stop elements 34 and 36.

The operation of the previously disclosed equipment is the following.

Figure 3 shows the starting position of a moulding cycle, in which the upper die 24 is in a raised position and the intermediate moulding element 48 is in its operative position. In this position, a frame 44 carrying a coating sheet 46 is positioned on the L-shaped brackets 42 of the upper die 24. At least one sheet of thermoplastic material 70, previously heated to a plasticizing temperature, is placed on the lower die 22. A lower coating sheet (not shown) can optionally be placed on the lower die before placing thereover the thermoplastic sheet (or sheets). The figures show the case in which two thermoplastic sheets 70 are used, between which a reinforcing element 72, for instance of metallic material is placed. In this preliminary step, the pipings 60 formed in the lower die 22 can be connected to a source of depression for maintaining the sheet or sheets 70 adhering to the surface 26.

In the following step, shown in figure 4, the upper die 24 is lowered until the stop elements 36, 68 and 34 enter in mutual contact. In this configuration, the surface 50 of the intermediate moulding element 48 performs a thermo-compression moulding of the sheets 70 against the surface 26. The moulding force is applied by the upper die 24 to intermediate moulding element through the stop elements 36, 38. A cutting edge 74 of the intermediate moulding element 48 cuts the surplus of thermoplastic material 76 which is eliminated as waste. Preferably, the cut is carried out without a direct contact of the cutting edge 74 against the opposite surface of the lower die 22. In fact, with a precise dimensioning of the stop elements 36, 68 and 34, it is possible to stop the movement of the cutting edge 74 a few tenths of millimetres before the cutting edge 74 meets the opposite surface of the lower moulding element 22 and the material 76 is cut also without direct contact of the cutting edge 74 against the opposite surface, which would rapidly wear the cutting edge. The sheets 70 are formed to their final configuration. During the moulding, different pressures are applied in the areas in which different thicknesses have to be obtained. The intermediate moulding element 48 is heated, so that the upper surface of the sheet 70 remains in a plastic state and maintains adhering features. At the same time, the coating sheet is subjected to a preliminary moulding between the surfaces 52 and 28.

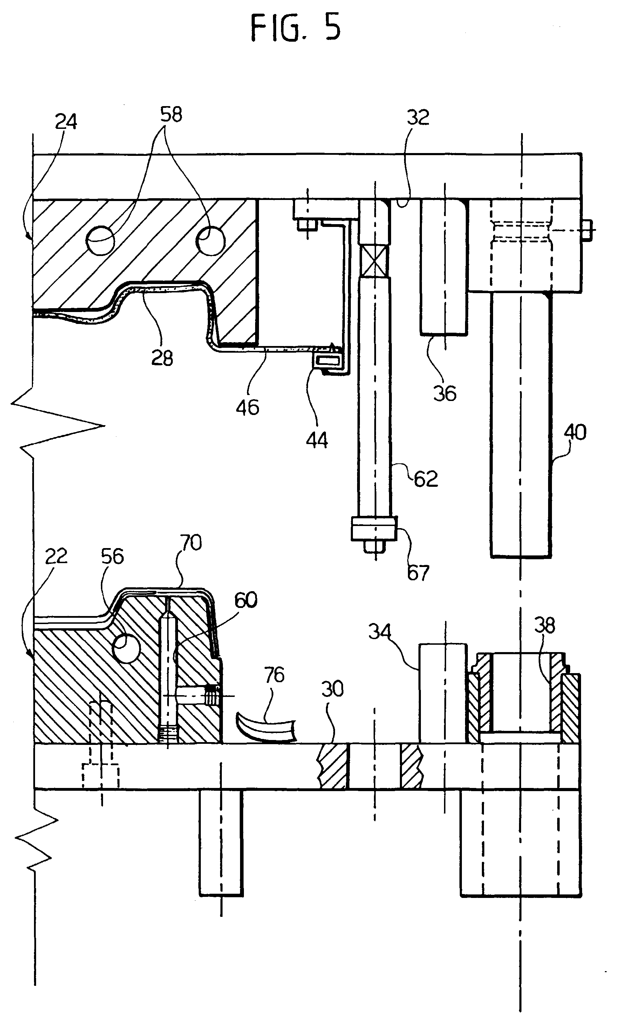

Subsequently, as show in figure 5, the upper die 24 is raised and the intermediate moulding element 48 is brought in its inoperative position. For facilitating the separation of the body of thermoplastic material, the intermediate moulding element 48 could be provided with a plurality of holes (not shown) formed on the moulding surface 50 and connected to a source of compressed air. As can be seen in figure 5, the coating sheet 46 has been pre-formed whereas the body of thermoplastic material formed by the sheet 70 is in its final configuration but with the upper surface still in a plastic state.

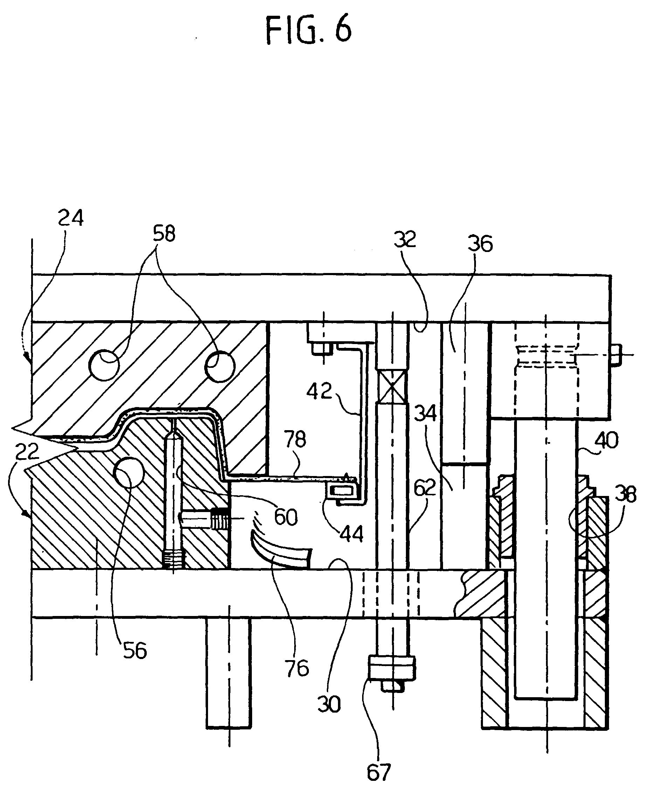

At this point, as show in figure 6, the upper die 24 is lowered again until the stop elements 36 and 34 are brought in mutual contact. In this phase, the coating 46 is applied on the upper surface of the body of thermoplastic material and adheres thereto by virtue of the fact that the upper surface of the body of thermoplastic material is still in a plastic state. After the coating 46 has been applied on the body of thermoplastic material, also the upper surface of the thermoplastic body cools down through the indirect contact with the upper die 24. At this point, the upper die 24 is raised. The body of thermoplastic material remains adherent to the coating 46 and remains connected to the frame 44 through the perimetral portion 78 of the fabric. For facilitating the separation of the body of thermoplastic material from the lower die 22 a jet of compressed air can be blown through the pipings 60.

As show in figure 2, the portion of fabric 78 in a step subsequent to the production of the article 10 can be bent and glued to the lower surface of the body of thermoplastic material 12.

During the step of application of the coating 78 on the body of thermoplastic material a uniform pressure is applied on all the surface of the coating. In fact, in this phase it is no more necessary to apply different pressures because the body of thermoplastic material has already been moulded to its final shape. In this way, diversity of colours or other types of markings of the coating due to different pressure during the step of application of the fabric on the body of the thermoplastic material are prevented.

In a variant of the moulding method according to the invention, the coating 46 is not subjected to a pre-forming between the surfaces 28 and 52 in order to prevent damages to the fabric due to the contact with the hot surface of the intermediate moulding element 48. In accordance with this variant, the heated sheets of thermoplastic materials 70 are placed between the lower die 22 and the intermediate moulding element 48 and the coating sheet is kept outside of the moulding equipment. The equipment is closed as previously disclosed, so as to mould the sheets 70 between the lower die 22 and the intermediate moulding element 48. The upper die 24 is raised, the intermediate moulding element 48 is brought in its inoperative position and the coating sheet 46 is positioned between the dies 22, 24, above the moulded sheets of thermoplastic material. The upper die is then lowered again so as to uniform compress the coating sheet against the upper surface of the body of thermoplastic material. Finally, the equipment is opened and the coated component is removed as previously disclosed.

## Claims

1. Equipment for moulding articles including a body (12) of thermoplastic material and at least one coating layer (14) applied on at least one surface of the body (12), comprising:
- an upper die (24) and a lower die (22), cooled down at a temperature lower than the plasticizing temperature of the body of thermoplastic material (12), and
- means for positioning said coating layer (46) between the upper die (24) and the lower die (22),
characterised by comprising an intermediate moulding element (48) provided with heating means (54) and having a forming surface (50) intended to co-operate with the lower die (22), the intermediate moulding element (48) being movable between an operating position in which it is placed between the upper die (24) and the lower die (22) and an inoperative position in which the dies (22, 24) co-operate directly with each other without the interposition of said intermediate moulding element (48).

2. Equipment according to claim 1, characterised in that the lower die (22), the upper die (24) and the intermediate moulding element (48) comprise respective elements (34, 36, 68) which define a first and a second closed configuration of the moulding equipment, wherein in the first closed configuration a body (70) of thermoplastic material is moulded between moulding surfaces (26, 50) respectively of the lower die (22) and of the intermediate moulding element (48), and wherein in the second closed configuration the moulding surface (28) of the upper die (24) co-operates with the moulding surface (26) of the lower die (22) for applying a coating layer (46) on the upper surface of the body of thermoplastic material (70).

3. Equipment according to claim 1 or claim 2, characterised in that_the intermediate moulding element (48) is slidably mounted on the upper die (24) in a direction parallel to the direction of movement of the upper die (24).

4. Equipment according to claim 1 or claim 2, characterised in that the intermediate moulding element (48) has a cutting edge (74) intended to co-operate with an opposite surface of the lower die (22) for cutting a surplus portion (76) of the body of thermoplastic material (70).

5. Equipment according to claim 1, characterised in that the intermediate moulding element (48) is provided with a plurality of holes which can be connected to a source of compressed air for producing a jet of air directed against a surface of the body of thermoplastic material adhering to the moulding surface (50)of the intermediate moulding element.

6. Equipment according to claim 1, characterised in that the intermediate moulding element (48) has a second forming surface (52) intended to co-operate with a corresponding surface (28) of the upper die (24) for carrying out a preliminary forming of said coating layer (46).
